# EUROPÄISCHE PATENTSCHRIFT

(11) **EP 0 560 238 B1**
(45) Veröffentlichungstag und Bekanntmachung des Hinweises auf die Patenterteilung: **16.10.1996**
(21) Anmeldenummer: 93103618.0
(22) Anmeldetag: 06.03.1993
(51) Int. Cl.: G01F 23/26

(54) **Sonde zur Überwachung von Flüssigkeit**
Probe for monitoring a liquid
Sonde pour le contrôle de liquide

(30) Priorität: 09.03.1992 DE 4207396; 03.12.1992 DE 4240608
(43) Veröffentlichungstag der Anmeldung: 15.09.1993
(73) Patentinhaber: GESTRA AG, D-28215 Bremen (DE)
(72) Erfinder: Föller, Werner, W-2805 Stuhr 1 (DE); Willenbrock, Helmut, W-2807 Achim (DE); Behnken, Wolfgang, W-2870 Delmenhorst (DE)
(74) Vertreter: Eisenführ, Speiser & Partner

(56) Entgegenhaltungen:
- EP-A- 0 101 580
- DE-A- 3 050 189
- FR-A- 2 405 469
- GB-A- 2 079 950
- US-A- 4 809 129
- PATENT ABSTRACTS OF JAPAN vol. 6, no. 121 (P-126)6. Juli 1982 & JP-A-57 048 616

## Beschreibung

Die Erfindung betrifft eine Sonde der im Oberbegriff des Hauptanspruches Spezifierten Art.

Aufgrund seiner Temperaturbeständigkeit und chemischen Beständigkeit hat sich PTFE - Polytetrafluoräthylen - als besonders vorteilhafter Werkstoff für Isolationshüllen von Sonden erwiesen. Allerdings ist PTFE beispielsweise für Wasserdampf nicht gänzlich undurchlässig. Es hat sich gezeigt, daß Wassermoleküle von heißem, unter überdruck stehendem Dampf durch die Isolationshülle der Sonde hindurch diffundieren und über diesen Weg Feuchtigkeit in das Sondengehäuse gelangt. Dort schlägt sich die Feuchtigkeit als Film nieder.

Das Sondengehäuse einer bekannten Sonde (DE-PS 30 50 189) weist an seinem flüssigkeitsfernen Ende eine geschlossene Anschlußkammer und an seinem anderen Ende eine Durchführungsbohrung auf. Eine Sensorelektrode erstreckt sich von der zu überwachenden Flüssigkeit durch die Durchführungsbohrung hindurch in das Sondengehäuse hinein und endet in der Anschlußkammer. Auf ganzer Länge ist die Sensorelektrode von einer Isolationshülle umgeben. Da die Sensorelektrode zwischen der Durchführungsbohrung des Sondengehäuses und der Anschlußkammer durch lange Isolationsstrecken gegen das Sondengehäuse elektrisch isoliert ist, führen Feuchtigkeitsfilme, die sich dort niederschlagen, zu keinen falschen Signalen der Sonde. In der Anschlußkammer ragt die Isolationshülle mit kurzem Überstand über den Boden der Anschlußkammer hinaus. Schlägt sich dort Feuchtigkeit nieder, dann bilden sich aufgrund der kurzen Isolationsstrecke zwischen der Sensorelektrode und dem Sondengehäuse Kriechströme aus, die zu Falschsignalen führen - d. h. ein Niveausignal, obwohl der entsprechende Flüssigkeitsstand tatsächlich nicht vorhanden ist.

Bei einer anderen bekannten Sonde (DE-PS 27 44 864) weist das Sondengehäuse an seinem flüssigkeitsfernen Ende eine zum übrigen Gehäuseinnenraum hin offene Anschlußkammer und an seinem anderen Ende eine Durchführungsbohrung auf. Eine Sensorelektrode erstreckt sich von der zu überwachenden Flüssigkeit durch die Durchführungsbohrung hindurch in das Sondengehäuse hinein und endet in der Anschlußkammer. Die Sensorelektrode ist von einer Isolationshülle umgeben, die im Sondengehäuse kurz oberhalb der Durchführungsbohrung endet. Ein sich dort niederschlagender Feuchtigkeitsfilm verursacht einen funktionsstörenden Kriechstrom zwischen der Sensorelektrode und dem als Gegenpol wirkenden Sondengehäuse. Dieser Kriechstrom kann zu falschen Signalen der Sonde führen. Insbesonder bei behälterseitig langen Sensorelektroden ist zwischen den Halterungsmitteln der Sensorelektrode und dem Sondengehäuse nur ein enger Radialspalt vorgesehen, damit bei eventuell im Behälter auftretenden Pendelbewegungen der Sensorelektrode im Sondengehäuse eine seitliche Abstützung erfolgt. Ein Feuchtigkeitsfilm im Bereich der Halterungsmittel führt dann gleichfalls zu einem funktionsstörenden Kriechstrom.

Eine andere bekannte Sonde (DE-PS 30 26 342) sieht eine Abzugkanal zur Atmosphäre für die durch Diffusion eindringende Feuchtigkeit vor. Auch in diesem Fall bilden sich aber, wie die Praxis gezeigt hat, funktionsstörende Feuchtigkeitsfilme und Kriechströme zwischen der Sensorelektrode und dem Sondengehäuse aus. Diese Kriechströme führen zu falschen Signalen.

Der Erfindung liegt die Aufgabe zugrunde, eine Sonde der eingangs genannten Art zu schaffen, bei der durch Feuchtigkeitsfilm bedingte Funktionsstörungen vermieden sind.

Diese Aufgabe wird durch die im Anspruch 1 angegebenen Merkmale gelöst.

Der Innenraum des Sondengehäuses zwischen der Durchführungsbohrung und der geschlossenen Anschlußkammer ist durch die Ventilationsöffnungen zur Atmosphäre hin offen. In dem offenen Innenraum ist zwischen dem Ende der Isolationshülle und dem benachbarten Ende der Isolierung des Leiters ein Spalt vorgesehen. Er bietet eine günstige Entweichmöglichkeit für Feuchtigkeit aus der Isolationshülle, so daß in die Isolationshülle eingedrungene Feuchtigkeit in den offenen, intensiv durchlüfteten Innenraum entweicht. Dort wird sie von der Luft aufgenommen und in die das Sondengehäuse umgebende Atmosphäre transportiert. Der Ausbildung von Feuchtigkeitsfilmen im Sondengehäuse ist auf diese Weise wirkungsvoll entgegengewirkt. überdies sind die elektrischen Leiter für die Signalströme - d. h. die Sensorelektrode und ihr angeschlossener Leiter - in dem offenen Innenraum durch lange Isolationsstrecken gegen die benachbarten Teile und die Atmosphäre isoliert. Würden sich dort Feuchtigkeitsfilme ausbilden, könnten keine störenden Kriechströme entstehen. Der elektrische Leiter und auch die zu den überwachungs-/Auswerteeinrichtungen führende Signalleitung sind isoliert und abgedichtet in die Anschlußkammer hineingeführt. Ohne daß dort besondere Isolierungen gegen Feuchtigkeitsfilme nötig sind, kann in der Anschlußkammer der elektrische Anschluß der Sonde an die Signalleitung erfolgen und nötigenfalls eine Elektronikeinheit (z. B. ein Vorverstärker) angeordnet werden.

Die Unteransprüche haben besonders vorteilhafte Weiterbildungen der Erfindung zum Gegenstand. Anspruch 2 gibt eine erste Ausführungsform an.

Die Weiterbildung nach Anspruch 3 schafft eine zuverlässige Isolierung am Ende der Isolationshülle und bietet zugleich eine günstige Entweichmöglichkeit für Feuchtigkeit aus der Isolationshülle.

Der Anspruch 4 gibt eine Alternativlösung zu der des Anspruches 2 an.

Die Merkmale des Anspruches 5 führen zu einer intensiven Belüftung des Endbereiches der Isolationshülle. Eventuell aus der Isolationshülle austretende Feuchtigkeit wird von der Luft aufgenommen und in die das Sondengehäuse umgebende Atmosphäre transportiert. Der Ausbildung von Feuchtigkeitsfilmen im Sondengehäuse ist auf diese Weise wirkungsvoll entgegengewirkt.

Das zweite Widerlager und das Distanzstück der zweiten Lösung können als zwei einzelne Bauteile ausgeführt werden. Eine andere bevorzugte Lösung gibt der Anspruch 6 an. Danach bilden das Widerlager und das Distanzstück ein einziges Bauteil in Form einer Kappe, wobei eine günstige Entweichmöglichkeit für Feuchtigkeit aus der Isolationshülle und eine ausreichende Belüftung des Endbereiches der Isolationshülle gegeben ist.

Eine bevorzugte Anordnung des zweiten Widerlagers hat der Anspruch 7 zum Gegenstand. In dem offenen Innenraum des Sondengehäuses sind die Leiter - d. h. die Sensorelektrode und ihr angeschlossener Leiter - gegen die benachbarten Teile und die Atmosphäre störungssicher elektrisch isoliert.

Mit den Merkmalen des Anspruches 8 wird bei beiden Lösungen eine besonders wirkungsvolle seitliche Abstützung der Sensorelektrode gegen Pendelbewegungen erreicht. Am Widerlager der Sensorelektrode kann eine solche seitliche Abstützmöglichkeit entfallen.

In der Zeichnung sind zwei Ausführungsbeispiele der erfindungsgemäßen Sonde dargestellt. Es zeigt
- Fig. 1: eine erste Ausführung der Sonde mit einem die Isolationshülle mit Abstand zu deren flüssigkeitsfernen Ende umgebenden hülsenförmigen Widerlager und
- Fig. 2: eine zweite Ausführung der Sonde mit einem die Isolationshülle von ihrem flüssigkeitsfernen Ende her umgebenden kappenförmigen Widerlager.

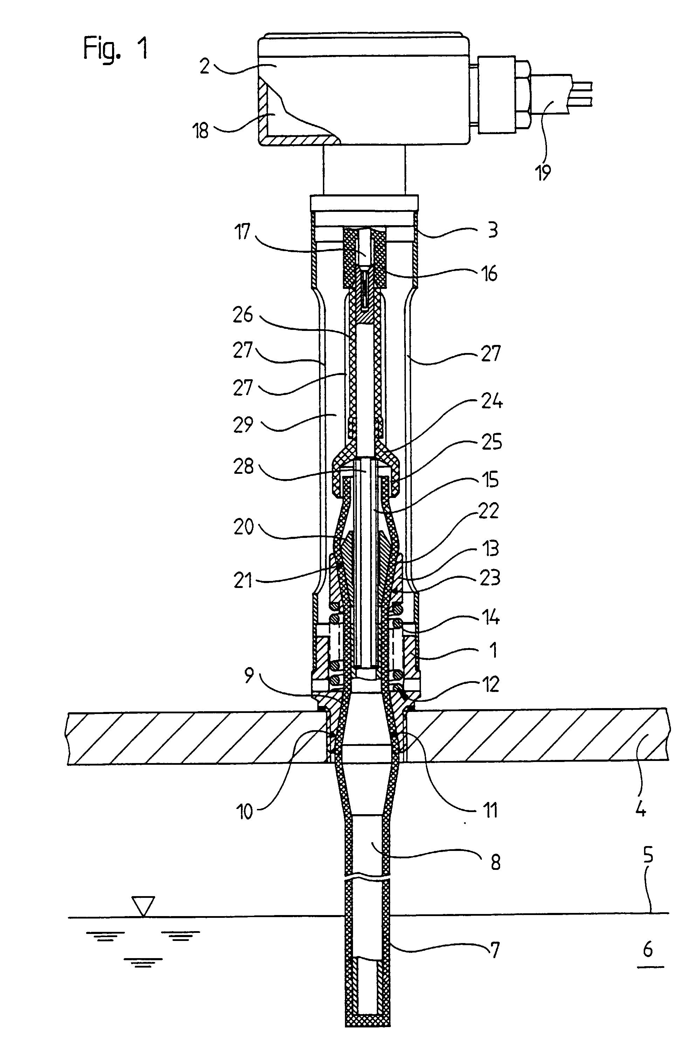

In Fig. 1 weist ein Sondengehäuse einen Durchführungsteil 1, einen Anschlußteil 2 und einen dazwischen angeordneten Mittelteil 3 auf. Mit dem Durchführungsteil 1 ist die Sonde an einem Behälter 4, z. B. einem Dampfkessel, angebracht, in dem der Flüssigkeitsstand 5 einer Flüssigkeit 6, z. B. Wasser, durch eine in den Behälter 4 hineinragende, dort allseitig von einer Isolationshülle 7 ummantelte Sensorelektrode 8 der Sonde überwacht werden soll.

Der Sondengehäuse-Durchführungsteil 1 weist eine zentrale Durchführungsbohrung 9 mit einer umlaufenden, sich zu dem der Flüssigkeit 6 fernen Ende hin konisch verjüngenden Dichtfläche 10 auf. Die Sensorelektrode 8 durchsetzt die Durchführungsbohrung 9 und weist gleichfalls eine umlaufende, sich zum flüssigkeitsfernen Ende hin konisch verjüngende Gegenfläche 11 auf. Beide Flächen 10, 11 liegen einander gegenüber. Die Isolationshülle 7 befindet sich zwischen diesen beiden, dabei erstreckt sie sich vom flüssigkeitsseitigen Bereich der Sensorelektrode 8 durch die Durchführungsbohrung 9 hindurch bis in den Sondengehäuse-Durchführungsteil 1 hinein. Letzterer ist angrenzend an die Durchführungsbohrung 9 mit einem ersten Widerlager 12 versehen. Mit Abstand dazu ist ein zweites Widerlager 13 mit der Sensorelektrode 8 verbunden. Zwischen beiden Widerlagern 12, 13 ist eine Anpreßfeder 14 eingespannt, die mit ihrem flüssigkeitsnahen Ende an dem ersten Widerlager 12 und mit ihrem flüssigkeitsfernen Ende an dem zweiten Widerlager 13 angreift.

Die rohrförmig ausgebildete Sensorelektrode 8 trägt an ihrem flüssigkeitsfernen Ende einen stabförmigen elektrischen Leiter 15, der sich im Sondengehäuse-Mittelteil 3 zum Sondengehäuse-Anschlußteil 2 hin erstreckt. Das dortige Ende des Leiters 15 wird radial von einem Lager 16 gestützt. Durch das Lager 16 führt ein mit dem Leiter 15 verbundener weiterer Leiter 17 in eine im Sondengehäuse-Anschlußteil 2 vorgesehene Anschlußkammer 18. Darin wird der Leiter 17 an eine Signalleitung 19 angeschlossen, die zu geeigneten Überwachungs-, Steuerungs- oder Auswerteeinrichtungen (nicht dargestellt) führt. Die Anschlußkammer 18 ist allseits geschlossen; zu diesem Zweck sind der Leiter 17 und die Signalleitung 19 abgedichtet durch die Wand der Anschlußkammer 18 geführt.

Auf dem Leiter 15 ist axial fixiert eine Hülse 20 angeordnet, die eine umlaufende, sich zum flüssigkeitsnahen Ende hin verjüngende konische Stützfläche 21 aufweist. Die Isolationshülle 7 erstreckt sich im Sondengehäuse 1, 3 von der Durchführungsbohrung 9 aus weiter bis über das flüssigkeitsferne Ende der Hülse 20 hinaus. Die Hülse 20 wird dabei von der Isolationshülle 7 umschlossen. Das Widerlager 13 weist eine zentrale Durchgangsbohrung 22 mit einer umlaufenden, sich zum flüssigkeitsnahen Ende hin konisch verjüngenden Stützfläche 23 auf. Beide Stützflächen 21, 23 liegen einander gegenüber. Unter der Wirkung der Anpreßfeder 14 wird die Stützfläche 23 des Widerlagers 13 von außen gegen die Isolationshülle 7 gepreßt, die sich ihrerseits auf der Stützfläche 21 der Hülse 20 abstützt. Von dort wird die Kraft der Anpreßfeder 14 über den Leiter 15 auf die Sensorelektrode 8 übertragen, wodurch die Gegenfläche 11 der Sensorelektrode 8, die Isolationshülle 7 und die Dichtfläche 10 des Sondengehäuse-Durchführungsteils 1 zuverlässig dichtend gegeneinander gepreßt werden.

Das flüssigkeitsferne Ende der Isolationshülle 7 wird im Sondengehäuse-Mittelteil 3 von einer auf dem Leiter 15 angeordneten Kappe 24 aus Isolationswerkstoff überdeckt und umgeben, wobei zwischen beiden ein Spalt 25 existiert. Von der Kappe 24 bis zum Lager 16 ist der Leiter 15 von einer Isolierung 26 umschlossen, und das Lager 16 besteht gleichfalls aus Isolationswerkstoff. Der Sondengehäuse-Mittelteil 3 weist seitlich mehrere großflächige Ventilationsöffnungen 27 auf, die sich vom Widerlager 13 über das flüssigkeitsferne Ende der Isolationshülle 7 bis zu dem Lager 16 erstrecken.

Wenn aus dem Behälter 4 Wassermoleküle durch die z. B. aus PTFE bestehende Isolationshülle 7 zur Sensorelektrode 8 hindurchdiffundieren, dann gelangen sie von dort durch die hohl ausgebildete Sensorelektrode 8 und eine Längsnut 28 des elektrischen Leiters 15 bis zum flüssigkeitsfernen Ende der Isolationshülle 7 und zur Kappe 24. Durch den Spalt 25 kann die Feuchtigkeit in das Sensorgehäuse-Mittelteil 3 entweichen. Zwischen dessen Innenraum 29 und der umgebenden Atmosphäre ergibt sich infolge der Ventilationsöffnungen 27 ein intensiver Luftaustausch. Feuchtigkeit verbleibt daher nicht im Innenraum 29, sondern gelangt in die das Sondengehäuse 1, 2, 3 umgebende Atmosphäre.

Im übrigen bietet die Isolationshülle 7 zwischen ihrem flüssigkeitsfernen Ende und dem Widerlager 13 eine lange Isolationsstrecke. Sollte sich doch einmal ein Feuchtigkeitsfilm auf der Isolationshülle 7 bilden, dann werden durch die lange Isolationsstrecke funktionsstörende Kriechströme zwischen der Sensorelektrode 8 und dem Sondengehäuse-Durchführungsteil 1 sowie damit Falschsignale der Sonde zuverlässig unterbunden. Durch die isolierende Kappe 24, die Isolierung 26 und das gleichfalls isolierende Lager 16 ist der Leiter 15 gegenüber dem Sondengehäuse-Mittelteil 3 und dem Sondengehäuse-Anschlußteil 2 isoliert. Damit ist auch dort funktionsstörenden Kriechströmen vorgebeugt. Da die Anschlußkammer 18 allseits geschlossen ist, dringt darin keine Feuchtigkeit ein, so daß sich dort diesbezügliche Isoliermaßnahmen erübrigen.

Statt am Leiter 15 kann die die Stützfläche 21 aufweisende Hülse 20 auf der Sensorelektrode 8 angeordnet werden. Möglich wäre es auch, die Stützfläche 21 unmittelbar an der Sensorelektrode 8 selbst vorzusehen. Das Widerlager 13 könnte wiederum statt einstückig aus zwei miteinander zu verbindenden Halbschalen gebildet werden. Bei größerer Länge des im Behälter 4 befindlichen Teils der Sensorelektrode 8 kann dieser mit Radialbohrungen versehen werden, die ein Hinwandern der durch die Isolationshülle 7 eingedrungenen Feuchtigkeit in die Längsbohrung der Sensorelektrode 8 erleichtern.

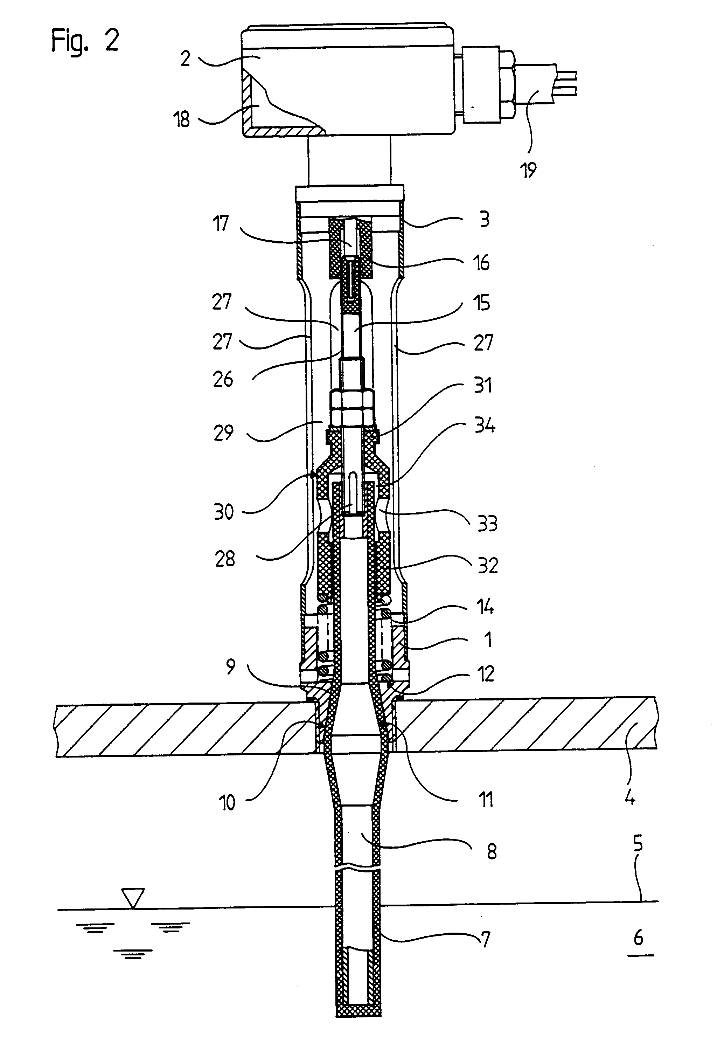

In Fig. 2 ragen die Sensorelektroden 8 und die Isolationshülle 7 axial weit über das flüssigkeitsferne Ende der Anpreßfeder 14 hinaus. Im Sondengehäuse-Mittelteil 3 befindet sich eine elektrisch isolierende Widerlagerkappe 30, die eine Stirnwand 31 und eine damit verbundene Distanzhülse 32 aufweist. Die Stirnwand 31 ist mit Abstand vor dem flüssigkeitsfernen Ende der Isolationshülle 7 und dementsprechend mit axialem Abstand zum flüssigkeitsfernen Ende der Anpreßfeder 14 auf dem Leiter 15 axial fixiert angeordnet. Die Stirnwand 31 fungiert als zweites Widerlager für die Anpreßfeder 14, das über den Leiter 15 mit der Sensorelektrode 8 verbunden ist. Die Distanzhülse 32 umgibt die Isolationshülle 7 und erstreckt sich zur Anpreßfeder 14, deren flüssigkeitsfernes Ende stirnseitig auf die Distanzhülse 32 einwirkt. Die Kraft der Anpreßfeder 14 wird über die Widerlagerkappe 30 und den Leiter 15 auf die Sensorelektrode 8 übertragen. Dadurch werden die Gegenfläche 11 der Sensorelektrode 8, die Isolationshülle 7 und die Dichtfläche 10 des Sondengehäuse-Durchführungsteils 1 zuverlässig dichtend gegeneinander gepreßt.

Nahe dem flüssigkeitsfernen Ende der Isolationshülle 7 weist die Distanzhülse 32 radiale Lüftungsöffnungen 33 auf. Zwischen der Isolationshülle 7 und der Distanzhülse 32 existiert zudem ein radialer Lüftungsspalt 34, der sich von der Stirnwand 31 bis zu den Lüftungsöffnungen 33 erstreckt.

Der Sondengehäuse-Mittelteil 3 weist seitlich mehrere großflächige Ventilationsöffnungen 27 auf, die sich beiderseits des flüssigkeitsfernen Endes der Isolationshülle 7 erstrecken. Der Leiter 15 ist von der Widerlagerkappe 30 bis zum Lager 16 von einer Isolierung 26, z. B. einem Schrumpfschlauch, umschlossen.

Wenn aus dem Behälter 4 Wassermoleküle durch die Isolationshülle 7 zur Sensorelektrode 8 hindurchdiffundieren, dann gelangen sie von dort durch die hohl ausgebildete Sensorelektrode 8 und die Längsnut 28 des elektrischen Leiters 15 bis zum flüssigkeitsfernen Ende der Isolationshülle 7 und in die Widerlagerkappe 30. Durch den Lüftungsspalt 34 und die Lüftungsöffungen 33 kann die Feuchtigkeit in das Sensorgehäuse-Mittelteil 3 entweichen. Zwischen dessen Innenraum 29 und der umgebenden Atmosphäre ergibt sich infolge der Ventilationsöffnungen 27 ein intensiver Luftaustausch und über die entsprechend groß bemessenen Lüftungsöffnungen 33 auch eine sehr intensive Luftbeaufschlagung der Isolationshülle 7. Feuchtigkeit gelangt somit in die das Sondengehäuse 1, 2, 3 umgebende Atmosphäre.

Im übrigen bieten die Isolationshülle 7 und die Widerlagerkappe 30 zwischen dem flüssigkeitsfernen Ende der Isolationshülle 7 - und damit der Sensorelektrode 8 - und der Anpreßfeder 14 eine sehr lange Isolationsstrecke.

Da die Sensorelektrode 8 und der damit verbundene Leiter 15 biegesteif ausgebildet und durch das Lager 16 seitlich gestützt sind, können im Behälter 8 eventuell auftretende Pendelbewegungen der Sensorelektrode 8 sich nicht bis in das Sondengehäuse fortsetzen. Beeinträchtigungen der Abdichtung an der Dichtfläche 10 sowie nachteilige seitliche Berührungen zwischen dem Widerlager 13 und dem Sondengehäuse-Mittelteil 3 werden dadurch verhindert.

Während die beiden Ausführungsformen nach den Figuren 1 und 2 eine besondere, an sich bekannte Halterung der Sensorelektrode 8 mittels Widerlager 12, 13 und einer Anpreßfeder 14 aufweisen, kann die vorliegende Erfindung selbstverständlich auch bei Sonden angewandt werden, bei denen die Halterung der Sensorelektrode 8 in dem Sondengehäuse 1, 3 auf andere Weise erfolgt. Entscheidend ist die Verlängerung der Isolationshülle durch die Haltemittel hindurch, um eine ausreichend verlängerte Isolierstrecke zu bilden. Auch die weitere Maßnahme der Ventilationsöffnungen ist bei anderen Halterungen möglich.

### Bezugszeichenliste:

- 1: Sondengehäuse-Durchführungsteit
- 2: Sondengehäuse-Anschlußteit
- 3: Sondengehäuse-Mittelteil
- 4: Behälter
- 5: Flüssigkeitsstand
- 6: Flüssigkeit
- 7: Isolationshülle
- 8: Sensorelektrode
- 9: Durchführungsbohrung
- 10: Dichtfläche
- 11: Gegenfläche
- 12, 13: Widerlager
- 14: Anpreßfeder
- 15: Leiter
- 16: Lager
- 17: Leiter
- 18: Anschlußkammer
- 19: Signalleitung
- 20: Hülse
- 21: Stützfläche
- 22: Durchgangsbohrung
- 23: Stützfläche
- 24: Kappe
- 25: Spalt
- 26: Isolierung
- 27: Ventilationsöffnung
- 28: Längsnut
- 29: Innenraum
- 30: Widerlagerkappe
- 31: Stirnwand
- 32: Distanzhülse
- 33: Lüftungsöffnungen
- 34: Lüftungsspalt

## Patentansprüche

1. Sonde zur Überwachung von Flüssigkeit mit
- einem Sondengehäuse (1, 2, 3), das an seinem flüssigkeitsfernen Ende eine Anschlußkammer (18), an seinem flüssigkeitsnahen Ende eine Durchführungsbohrung (9) mit einer Dichtfläche (10) und dazwischen gelegen einen Mittelteil (3) aufweist,
- einer die Durchführungsbohrung (9) durchsetzenden Sensorelektrode (8), die mit einer Gegenfläche (11) versehen ist,
- einer die Sensorelektrode (8) ummantelnden Isolationshülle (7), die sich vom flüssigkeitsseitigen Bereich der Sensorelektrode (8) durch die Durchführungsbohrung (9) hindurch bis in das Sondengehäuse (3) hinein erstreckt, und
- die Sensorelektrode (8) umgebenden Halterungsmitteln (13, 14; 32, 14), die die Sensorelektrode (8) in dem Sondengehäuse (1, 2, 3) haltern und die Dichtfläche (10), die Isolationshülle (7) sowie die Gegenfläche (11) aufeinanderpressen, wobei sich die Isolationshülle (7) im Sondengehäuse (3) von der Durchführungsbohrung (9) aus durch die Halterungsmittel (13, 14; 329 14) hindurch weiter erstreckt,
dadurch gekennzeichnet, daß
- die Sensorelektrode (8) und die Isolationshülle (7) im Mittelteil (3) des Sondengehäuses enden,
- sich von der Sensorelektrode (8) in die Anschlußkammer (18) hinein ein elektrischer Leiter (15; 17) erstreckt, der zwischen der geschlossenen Anschlußkammer (18) und dem Ende der Isolationshülle (7) mit einer Isolierung (26) versehen ist,
- zwischen den benachbarten Enden von Isolierung (26) und Isolationshülle (7) ein Spalt (25; 34) vorhanden ist,
- der Mittelteil (3) des Sondengehäuses im Endbereich der Isolationshülle (7) Ventilationsöffnungen (27) aufweist, die zu einem intensiven Luftaustausch zwischen dem Innenraum (29) des Sondengehäuse-Mittelteils (3) und der umgebenden Atmosphäre führen, und
- die Halterungsmittel (13, 14; 32, 14) die Dichtfläche (10), die Isolationshülle (7) und die Gegenfläche (11) derart aufeinanderpressen, daß der Innendruck eines Behälters (4), in den die Sonde hineinragt, die Preßkraft zwischen der Dichtfläche (10), der Isolationshülle (7) und der Gegenfläche (11) vergrößert.

2. Sonde nach Anspruch 1,
dadurch gekennzeichnet, daß
- die Dichtfläche (10) und die Gegenfläche (11) sich zum flüssigkeitsfernen Ende hin verjüngen,
- im Sondengehäuse (3) flüssigkeitsnah ein erstes gehäuseseitiges Widerlager (12) angeordnet ist,
- im Sondengehäuse (3) flüssigkeitsfern ein die Isolationshülle (7) mit einer Stützfläche (23) umfassendes zweites Widerlager (13) angeordnet ist,
- an der Sensorelektrode (8) im Bereich der Stützfläche (23) des zweiten Widerlagers (13) in der Isolationshülle (7) eine Stützfläche (21) angeordnet ist, wobei sich beide Stützflächen (21, 23) zum flüssigkeitsnahen Ende hin verjüngen, und
- eine Anpreßfeder (14) mit ihrem einen Ende am ersten und mit ihrem anderen Ende am zweiten Widerlager (12, 13) angreift.

3. Sonde nach Anspruch 1 oder 2,
dadurch gekennzeichnet, daß das elektrodenseitige Ende der Isolierung (26) als Kappe (24) ausgebildet ist, die das Ende der Isolationshülle (7) unter Bildung des Spaltes (25) umgibt.

4. Sonde nach Anspruch 1,
dadurch gekennzeichnet, daß
- die Dichtfläche (10) und die Gegenfläche (11) sich zum flüssigkeitsfernen Ende hin verjüngen,
- im Sondengehäuse (3) ein erstes gehäuseseitiges Widerlager (12) angeordnet ist,
- eine Anpreßfeder (14) mit ihrem flüssigkeitsnahen Ende am ersten Widerlager (12) angreift,
- mit axialem Abstand zum flüssigkeitsfernen Ende der Anpreßfeder (14) im Sondengehäuse (3) ein mit der Sensorelektrode (8) verbundenes zweites Widerlager (31) angeordnet ist und
- zwischen dem zweiten Widerlager (31) und dem flüssigkeitsfernen Ende der Anpreßfeder (14) außerhalb der Isolationshülle (7) ein elektrisch isolierendes Distanzstück (32) angeordnet ist.

5. Sonde nach Anspruch 4,
dadurch gekennzeichnet, daß das Distanzstück (32) in seinem dem flüssigkeitsfernen Ende der Isolationshülle (7) nahen Bereich Lüftungsöffnungen (33) aufweist, die das Ende der Isolationshülle (7) mit dem Innenraum (29) des Sondengehäuse-Mittelteils (3) verbinden.

6. Sonde nach Anspruch 5,
dadurch gekennzeichnet, daß das zweite Widerlager (31) und das Distanzstück (32) von einer Widerlagerkappe (30) gebildet werden, die die Isolationshülle (7) unter Bildung des Spaltes (34) umgibt, wobei dieser das Ende der Isolationshülle (7) mit den Lüftungsöffnungen (33) verbindet.

7. Sonde nach einem oder mehreren der Ansprüche 4 bis 6,
dadurch gekennzeichnet, daß der sich von der Sensorelektrode (8) zur Anschlußkammer (18) erstreckende elektrische Leiter (15) zugfest ausgebildet und an ihm das zweite Widerlager (21) gehalten ist, wobei sich die Isolierung (26) zwischen der Anschlußkammer (18) und dem zweiten Widerlager (21) erstreckt.

8. Sonde nach einem oder mehreren der vorhergehenden Ansprüche, dadurch gekennzeichnet, daß die Sensorelektrode (8) und der elektrische Leiter (15) biegesteif ausgebildet sind und im Sondengehäuse (2, 3) ein den Leiter (15) radial umfassendes Lager (16) vorgesehen ist.

## Claims

1. A probe for monitoring liquid, having
- a probe housing (1, 2, 3), which has at its end remote from the liquid a connector chamber (18), at its end near to the liquid a lead-through bore (9) having a sealing surface (10), and positioned therebetween a central part (3),
- a sensor electrode (8) which passes through the bushing bore (9) and is provided with a countersurface (11),
- an insulating sleeve (7) which sheathes the sensor electrode (8) and which extends from the region of the sensor electrode (8) on the liquid side through the bushing bore (9) into the probe housing (3), and
- mounting means (13, 14; 32, 14) which surround the sensor electrode (8), mount the sensor electrode (8) in the probe housing (1, 2, 3) and press the sealing surface (10), the insulating sleeve (7) and the countersurface (11) onto one another, the insulating sleeve (7) in the probe housing (3) extending further out of the bushing bore (9) through the mounting means (13, 14; 32, 14),
characterized in that
- the sensor electrode (8) and the insulating sleeve (7) end in the central part (3) of the probe housing,
- an electrical conductor (15; 17) extends from the sensor electrode (8) into the connector chamber (18) and is provided with an insulating means (26) between the closed connector chamber (18) and the end of the insulating sleeve (7),
- there is a gap (25; 34) between the adjacent ends of the insulating means (26) and the insulating sleeve (7),
- the central part (3) of the probe housing has in the end region of the insulating sleeve (7) ventilation openings (27) which produce an intensive exchange of air between the interior (29) of the probe housing central part (3) and the surrounding atmosphere, and
- the mounting means (13, 14; 32, 14) press the sealing surface (10), the insulating sleeve (7) and the countersurface (11) onto one another in such a manner that the internal pressure of a container (4) into which the probe projects increases the pressure force between the sealing surface (10), the insulating sleeve (7) and the countersurface (11).

2. A probe according to Claim 1,
characterized in that
- the sealing surface (10) and the countersurface (11) taper towards the end remote from the liquid,
- there is arranged in the probe housing (3), near to the liquid, a first abutment (12) on the housing side,
- there is arranged in the probe housing (3), remote from the liquid, a second abutment (13) enclosing the insulating sleeve (7) by means of a bearing surface (23),
- there is arranged on the sensor electrode (8), in the region of the bearing surface (23) of the second abutment (13), in the insulating sleeve (7) a bearing surface (21), both bearing surfaces (21, 23) tapering towards the end near to the liquid, and
- a pressure contact spring (14) acts upon the first abutment with its one end and upon the second abutment (12, 13) with its other end.

3. A probe according to Claim 1 or 2,
characterized in that the end of the insulating means (26) on the electrode side is constructed as a cap (24) which surrounds the end of the insulating sleeve (7) to form the gap (25).

4. A probe according to Claim 1,
characterized in that
- the sealing surface (10) and the countersurface (11) taper towards the end remote from the liquid,
- a first abutment (12) on the housing side is arranged in the probe housing (3),
- a pressure contact spring (14) acts upon the first abutment (12) with its end near to the liquid,
- a second abutment (31) connected to the sensor electrode (8) is arranged, axially spaced from the end of the pressure contact spring (14) remote from the liquid, in the probe housing (3), and
- an electrically insulating spacer block (32) is arranged between the second abutment (31) and the end of the pressure contact spring (14) remote from the liquid, outside the insulating sleeve (7).

5. A probe according to Claim 4,
characterized in that the spacer block (32) has, in its region near to the end of the insulating sleeve (7) remote from the liquid, ventilation openings (33) which connect the end of the insulating sleeve (7) to the interior (29) of the probe housing central part (3).

6. A probe according to Claim 5,
characterized in that the second abutment (31) and the spacer block (32) are formed by an abutment cap (30) which surrounds the insulating sleeve (7) to form the gap (34), the latter connecting the end of the insulating sleeve -(7) to the ventilation openings (33).

7. A probe according to one or more of Claims 4 to 6,
characterized in that the electrical conductor (15) extending from the sensor electrode (8) to the connector chamber (18) is constructed to resist tensile stress, and the second abutment (21) is held against it, the insulating means (26) extending between the connector chamber (18) and the second abutment (21).

8. A probe according to one or more of the preceding claims, characterized in that the sensor electrode (8) and the electrical conductor (15) are constructed to resist bending, and there is provided in the probe housing (2, 3) a bearing (16) which radially encloses the conductor (15).

## Revendications

1. Sonde pour le contrôle de liquide comprenant
- un boîtier de sonde (1, 2, 3) comportant, à son extrémité éloignée du liquide, une chambre de jonction (18), à son extrémité proche du liquide, un trou de passage (9) muni d'une surface d'étanchéité (10) et, entre eux, un élément central (3),
- une électrode détectrice (8) qui traverse le trou de passage (9) et comporte une contre-surface (11),
- un manchon isolant (7) qui gaine l'électrode détectrice (8) et s'étend de la zone de l'électrode détectrice (8) située côté liquide jusque dans le boîtier (3) de la sonde à travers le trou de passage (9), et
- des moyens de support (13, 14 ; 32, 14) qui entourent l'électrode détectrice (8), qui maintiennent l'électrode détectrice (8) dans le boîtier (1, 2, 3) de la sonde et appliquent les uns contre les autres la surface d'étanchéité (10), le manchon isolant (7) ainsi que la contre-surface (11), le manchon isolant (7) s'étendant au-delà des moyens de support (13, 14 ; 32, 14) dans le boîtier (3) de la sonde à partir du trou de passage (9),
caractérisée en ce que
- l'électrode détectrice (8) et le manchon isolant (7) se terminent dans l'élément central (3) du boîtier de la sonde;
- un conducteur électrique (15 ; 17) pénètre dans la chambre de jonction (18) à partir de l'électrode détectrice (8) et est pourvu d'un isolant (26) entre la chambre fermée de jonction (18) et l'extrémité du manchon isolant (7),
- un interstice (25 ; 34) est prévu entre les extrémités voisines de l'isolant (26) et le manchon isolant (7),
- l'élément central (3) du boîtier de la sonde comporte, dans la zone terminale du manchon isolant (7), des orifices de ventilation (27) qui provoquent un échange d'air intensif entre la cavité (29) de l'élément central (3) du boîtier de la sonde et l'atmosphère ambiante, et
- les moyens de support (13, 14 ; 32, 14) appliquent les uns contre les autres la surface d'étanchéité (10), le manchon isolant (7) et la contre-surface (11), de façon que la pression intérieure d'un récipient (4), dans lequel pénètre la sonde, augmente la force de pression entre la surface d'étanchéité (10), le manchon isolant (7) et la contre-surface (11).

2. Sonde selon la revendication 1, caractérisée en ce que
- la surface d'étanchéité (10) et la contre-surface (11) se rétrécissent en direction de l'extrémité éloignée du liquide,
- un premier contre-appui (12) situé côté boîtier est disposé dans le boîtier (3) de la sonde près du liquide,
- un second contre-appui (13) entourant le manchon isolant (7) par une surface d'appui (23) est disposé dans le boîtier (3) de la sonde loin du liquide,
- une surface d'appui (21) est prévue au niveau de l'électrode détectrice (8) dans la zone de la surface d'appui (23) du second contre-appui (13) dans le manchon isolant (7), les deux surfaces d'appui (21, 23) se rétrécissant en direction de l'extrémité proche du liquide, et
- un ressort d'application (14) agissant, par l'une de ses extrémités, sur le premier contre-appui (12) et, par son autre extrémité, sur le second contre-appui (13).

3. Sonde selon la revendication 1 ou 2, caractérisée en ce que l'extrémité de l'isolant (26) située côté électrode est conçue sous la forme d'une coiffe (24) qui entoure l'extrémité du manchon isolant (7) en formant un interstice (25).

4. Sonde selon la revendication 1, caractérisée en ce que
- la surface d'étanchéité (10) et la contre-surface (11) se rétrécissent en direction de l'extrémité éloignée du liquide,
- un premier contre-appui (12) situé côté boîtier est disposé dans le boîtier (3) de la sonde,
- un ressort d'application (14) agit sur le premier contre-appui (12) avec son extrémité proche du liquide,
- un second contre-appui (31) relié à l'électrode détectrice (8) est disposé dans le boîtier (3) de la sonde à distance axiale de l'extrémité du ressort d'application (14) éloignée du liquide, et
- une pièce d'écartement électriquement isolante (32) est disposée à l'extérieur du manchon isolant (7) entre le second contre-appui (31) et l'extrémité du ressort d'application (14) éloignée du liquide.

5. Sonde selon la revendication 4, caractérisée en ce que la pièce d'écartement (32) comporte, dans sa zone proche de l'extrémité du manchon isolant (7) éloignée du liquide, des orifices de ventilation (33) qui mettent en communication l'extrémité du manchon isolant (7) et la cavité (29) de l'élément central (3) du boîtier de la sonde.

6. Sonde selon la revendication 5, caractérisée en ce que le second contre-appui (31) et la pièce d'écartement (32) sont formés par une coiffe de contre-appui (30) qui entoure le manchon isolant (7) en formant un interstice (34), celui-ci mettant en communication l'extrémité du manchon isolant (7) et les orifices de ventilation (33).

7. Sonde selon une ou plusieurs des revendications 4 à 6, caractérisée en ce que le conducteur électrique (15) s'étendant de l'électrode détectrice (8) à la chambre de jonction (18) est résistant à la traction et le second contre-appui (21) est maintenu contre lui, l'isolant (26) s'étendant entre la chambre de jonction (18) et le second contre-appui (21).

8. Sonde selon une ou plusieurs des revendications précédentes, caractérisée en ce que l'électrode détectrice (8) et le conducteur électrique (15) sont rigides en flexion, et un palier (16) entourant radialement le conducteur (15) est prévu dans le boîtier (2, 3) de la sonde.
